Europäisches Patentamt

(19) European Patent Office  (11) Publication number: **0 195 642**

Office européen des brevets  **A2**

(12) **EUROPEAN PATENT APPLICATION**

(21) Application number: 86301948.5  (51) Int. Cl.⁴: **F 26 B 25/00**
**F 26 B 20/00, F 26 B 1/00**

(22) Date of filing: 17.03.86

(30) Priority: **19.03.85 GB 8507109**

(43) Date of publication of application:
**24.09.86 Bulletin 86/39**

(84) Designated Contracting States:
**AT BE CH DE FR GB IT LI LU NL SE**

(71) Applicant: **Burdett, Savile**
**35 Park Avenue**
**Solihull, West Midlands B91 3EJ(GB)**

(72) Inventor: **Burdett, Savile**
**35 Park Avenue**
**Solihull, West Midlands B91 3EJ(GB)**

(74) Representative: **Leach, John Nigel et al,**
**FORRESTER & BOEHMERT Widenmayerstrasse 4/I**
**D-8000 München 22(DE)**

(54) **Method and apparatus for recovering heat.**

(57) A method of recovering heat from a furnace (2) in which granular material is subjected to heat, comprises the steps of extracting hot gases from the furnace (2), passing at least a proportion of the hot gases through further granular material outside the furnace, for example in a hopper (H) and subsequently feeding the further granular material into the furnace for heating.

Title: "Method and apparatus for recovering heat"

This invention relates to a method and apparatus for recovering heat from a furnace in which granular material is subjected to heat.

Such a furnace may, for example, be simply for heating the granular material, or may be for drying the granular material. An example of such a furnace is for the drying of cleaned stones prior to coating the stones with tar, although the invention has many other applications as will become apparent from the description below.

In a stone drying furnace, it is common practice for exhaust gases from the furnace to be fed to a scrubber where the gases are subjected to a water spray to remove solids, such as grit and dust, and then to vent the exhaust gases to atmosphere.

Where it is required to recover heat produced by the furnace, the gases may be passed through a heat exchanger. The heat recovered in the heat exchanger may be used for example, to heat air which may be fed to a gas or oil burner of the furnace, where provided, or for other heating needs.

This has the disadvantage of the cost of providing and maintaining the heat exchanger. Such heat exchangers do not have a long life because of the abrasive effect of solids which may be entrained in the exhaust gases.

An alternative method of recovering heat is to use a heat recuperator, which may comprise two masses of high heat capacity. Whilst one mass is being heated by the exhaust gases, the other is being cooled by air which may then be supplied to an oil or gas burner of the furnace, where provided. The masses of the recuperator need to be large resulting in high cost and usage of space, and the masses which may comprise stones, progressively become contaminated by the solids entrained in the exhaust gases, as the exhaust gases are passed through the masses.

Accordingly, it is an object of the present invention to provide a new or improved method and apparatus for recovering heat from a furnace.

According to a first aspect of the invention I provide a method of recovering heat from a furnace in which granular material is subjected to heat, the method comprising the steps of extracting hot exhaust gases from the furnace, passing at least a proportion of the hot gases through further granular material outside the furnace, and subsequently feeding the further granular material into the furnace for heating.

Thus the further granular material is pre-heated before being fed into the furnace. This method overcomes the disadvantage of using a heat exchanger as mentioned above, whilst the method enables more heat to be recovered than with a conventional heat recuperator.

Preheated further granular material may be continuously fed into the furnace, or if desired, may be fed into the furnace in batches.

Preferably, a fan means is provided to extract the hot exhaust gases from the furnace and to drive the hot gases through the further granular material. Because of the nature of the granular material, the hot gases will need to undergo a tortuous path through the further granular material thereby resulting in efficient heating of the further granular material.

If desired, the extracted hot exhaust gases may be passed through a separating means prior to passing through the further granular material, thereby to separate solids such as grit or dust which may be entrained in the gases. Thus the furnace does not become increasingly contaminated with grit and dust.

One such separating means may comprise one or more cyclone separators, although any other means of separating the solids, such as a filter, may be provided.

The further granular material through which the hot exhaust gases are passed, may be contained in a container such as a hopper. Thus conveniently, the further granular material may be fed directly from the hopper into the furnace for heating.

Thus the hot exhaust gases may be fed into the hopper or other container through an inlet in a wall thereof, and may be constrained to pass generally through the further granular material before passing from the hopper or other container.

It will be appreciated that the hot exhaust gases are cooled as they preheat the further granular material, and where the mass of further granular material contained in the hopper is large, the temperature of the exhaust gases may drop so far that any moisture entrained in the exhaust gases condenses, thereby giving up its latent heat.

- 3 -

0195642

This moisture may be removed from the hopper or other container through an opening or openings in a lower wall thereof.

To improve the heat transfer between the hot gases and the further granular material, and to minimise the pressure drop at distances from where the hot gases are initially passed into the further granular material, if desired the further granular material may be agitated as the hot exhaust gases are passed therethrough. For example, the further granular material may be supported on a vibrating screen within the hopper or other container, as the hot exhaust gases pass therethrough. This also provides an advantage where the further granular material is continuously fed into the furnace, as this agitating assists material flow.

The method may include the step of monitoring the temperature of the further granular material at spaced positions from where the hot exhaust gases are initially passed into the further granular material, and the rate at which the hot exhaust gases are passed into the further granular material may be adjusted to provide optimum heating of the further granular material, depending on the temperatures sensed.

Alternatively, the extent of condensation of moisture from the hot exhaust gases within the further granular material may be sensed and the rate at which the exhaust gases are passed into the further granular material correspondingly adjusted to achieve optimum heat transfer between the exhaust gases and the further granular material.

Towards the end of processing a given quantity of granular material, the mass of further granular material in the hopper still to be fed into the furnace may be insufficient to absorb the heat from the heat exhaust gases sufficient to drop the temperature to the dew point when condensation will take place.

If desired a proportion of the hot gases can be diverted by a suitable valve means, for example, to a scrubber such as a water spray device, to remove solids such as grit or dust which may be entrained in the exhaust gas, and to reduce the temperature of the exhaust gas before venting the gas to atmoshere, without passing all the hot exhaust gases through the further granular material.

As the bulk of further granular material still to be fed into the furnace further reduces, a progressive proportion or in the end, the total of the hot exhauses gases may be fed to the scrubber and hence be vented to the atmosphere without being passed through the further granular material at all.

- 4 -

0195642

In a preferred embodiment, the granular material and the further granular material, comprise stones which have been cleaned by washing. Thus the stones are dried and heated in the furnace.

According to a second aspect of the invention I provide an apparatus for recovering heat from a furnace in which granular material is subjected to heat, the apparatus comprising means to extract exhaust gases from the furnace, means to pass the hot gases through further granular material outside the furnace, and means subsequently to feed the further granular material into the furnace.

Preferably, the further granular material is contained within a hopper as the hot gases are passed therethrough.

The apparatus according to the second aspect of the invention may have any of the features of an apparatus for use in the method according to the first aspect of the invention.

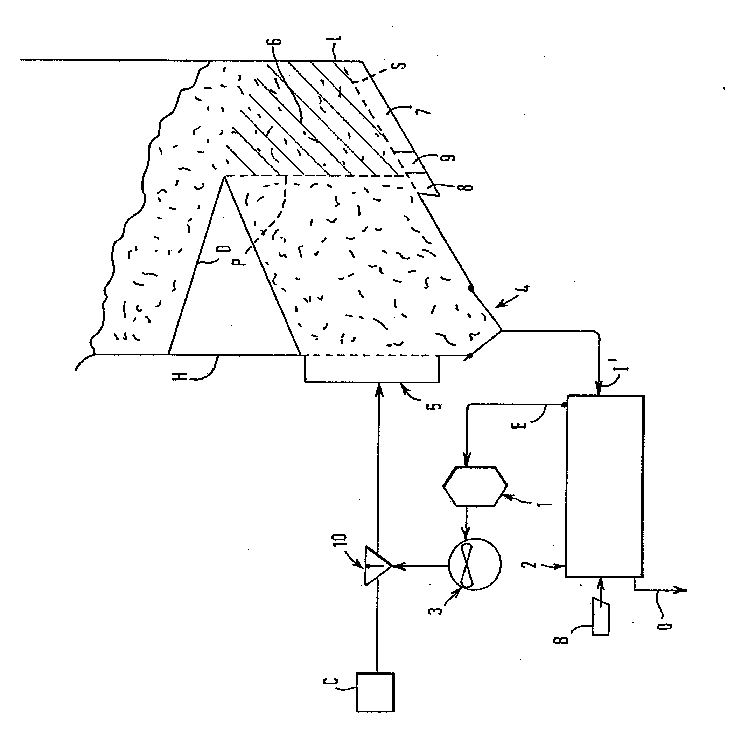

The invention will now be described with the aid of the accompanying drawing which is a diagrammatic illustration of an apparatus for use in a method according to the invention.

A furnace for drying washed granular material such as stones, is shown at 2 in the accompanying drawing.

The furnace may have an oil or gas burner as indicated at B, or alternatively, an electrical or other heating means.

The furnace includes an outlet O through which the dried granular material is removed, from where the material may, for example, be fed to a coating means where the stones may be coated with tar.

Hot exhaust gases are extracted from the furnace 2 via an exhaust outlet indicated at E, by a fan 3, although the exhaust gases are fed to a cyclone separator I whereby solids entrained in the exhaust gases, such as grit or dust etc. may be separated from the exhaust gases, before the gases pass into the fan 3.

The fan 3 feeds the cleaned hot exhaust gases to an inlet 5 of a hopper H via a valve 10, the purpose of which will become apparent hereinafter.

The hopper H has an upper part U and a lower part L, separated by a generally triangular shaped divider D. Granular material which is to be fed into the furnace 2, is introduced into the upper part U of the hopper H, and passes downwardly to an outlet indicated at 4, from where the granular material may be fed into the furnace 2 via an inlet indicated at I'.

The process is continuous, that is granular material from the hopper H is continuously fed into the furance 2 through inlet I'.

Of course, the rate of feeding the material into the furnace 2, must be selected such as to enable the stones to be pre-heated to a required degree in the hopper H, as well as to make efficient use of the furnace 2.

Alternatively, the pre-heated material from the hopper H may be fed into the furnace 2 in discrete batches, if required.

Gases which pass from the granular material in the upper part U of the hopper, may be vented directly to atmosphere or otherwise recycled as required.

It can be seen that the inlet 5 for the hot exhaust gases is provided in a side wall of the hopper, but once the gases are introduced into the hopper, they pass generally upwardly, to the upper part U of the hopper, although the gases will need to undergo a tortuous path in the spaces between the individual grains of the granular material.

The granular material contained within the hopper H will thus be pre-heated by the exhaust gases before being fed into the furnace 2. It will be appreciated that the temperature at the outlet 4 of the hopper, which is generally adjacent the inlet 5 of the hot exhaust gases, will comprise the most hot granular material, and the temperature of the granular material will decrease as the distance from the inlet 5 for the exhaust gases, increases.

A condensation zone is indicated at 6. It will be appreciated that as heat is absorbed by the granular material i.e. the stones in the hopper H, the temperature of the exhaust gases will decrease as the distance from the inlet 5 for the exhaust gases increases. Eventually, the temperature of the exhaust gases will decrease below the dew point of the moisture in the exhaust gases, caused by the burning of hydrocarbons and the like in the furnace and the moisture caused by drying the stones. This moisture will condense on the stones in the condensation zone 6 and will percolate downwardly through the granular material.

The position at which the condensation zone 6 begins is indicated at P.

The moisture which percolates downwardly through the granulated material, passes through a screen indicated at S into a space indicated at 7. The condensation may then pass to an outlet 9 in the bottom of the hopper H from where it may be removed.

Preferably, the rate at which the exhaust gases are fed into the hopper H is varied according to the efficiency of heating of the granular material in the hopper H.

To sense this, preferably a moisture sensor is positioned in an outlet 8 in the bottom wall of the hopper, upstream of the position P of the condensation zone 6. Thus if the exhaust gases are cooled upstream of the condensation zone 6 so that moisture in the exhaust gases condenses before reaching the zone 6, moisture would be detected by the sensor in the outlet 8. In this event, the rate at which exhaust gases are fed into the granulated material may thus be increased, for example, by speeding up of the rate of extraction of the exhaust gases by the fan 3.

Alternatively, temperature sensors may be spaced at varying positions from the inlet 5 for the exhaust gases, to sense the temperature at those positions. A signal may be derived from the sensors and used by a control means to vary the rate of extraction of fan 3 of the exhaust gases from the furnace 2.

Alternatively, the rate of feeding the exhaust gases to the hopper H may be adjusted by adjusting valve 10. Thus the fan 3 may always operate at an optimum speed for maintaining the temperature within the furnace 2 at a desired temperature. The valve 10 may be arranged to feed all the exhaust gases to the hopper H, or to feed a proportion to a conventional scrubber indicated at C, which may comprise a water spray device for removing the solids entrained in the exhaust gases, and reducing the temperature of the exhaust gases, before venting the gases to atmosphere.

Towards the end of processing a given quantity of granular material, the mass of further granular material in the hopper still to be fed into the furnace may be insufficient to absorb the heat from the hot exhaust gases sufficient to drop the temperature to the dew point when condensation will take place.

Thus the valve 10 may also direct a proportion of the gases to the scrubber C in these circumstances.

As the bulk of further granular material still to be fed into the furnace further reduces, a progressive proportion or in the end, the total of the hot exhaust gases may be fed to the scrubber and hence be vented to the atmosphere without being passed through the further granular material at all.

Many modifications are possible without departing from the scope of the invention. For example, instead of varying the rate of extraction of the exhaust gases from the furnace 2 by varying the speed of the fan, and/or varying the rate of feeding the exhaust gases to the hopper H using the valve 10, two or more fans with varying speeds may be provided which may be switched in as required to extract the exhaust gases from the furnace 2 and feed them to a scrubber C and/or the hopper H as required.

The fans could be positioned such that one of the fans draws hot exhaust gases from the furnace 2 whilst the other fan may be arranged to drive air into the furnace 2, to increase the rate of drying in the furnace 2, or both fans may be positioned as shown.

Instead of a cyclone separator such as indicated at I, any other separating means to separate solids entrained in the hot exhaust gases could be provided, such as a filter.

Although the hopper as described has had provided therein a generally triangular division plate D, and the exhaust gases have been fed into the hopper through an inlet 5 in a side wall of the hopper, any other arrangement for feeding hot gases into a hopper of any other design, or any other container, may be provided as required. For example, the hot gases may be introduced into the hopper H, through the top or through the bottom.

It has been found desirable for the granular material within the hopper or other container to be vibrated as the exhaust gases are passed therethrough, to improve the efficiency of transfer of heat from the exhaust gases into the granular material. In this event, if desired, the granular material within the hopper H or other container may be supported on a vibrating screen or tray.

Although as described, the means for removing moisture which condenses in the granular material in the hopper H comprises two outlets 8 and 9, any other means for removing the moisture from the granular material in the hopper or other container, may be provided.

The features disclosed in the foregoing description, in the following claims, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

## CLAIMS

1. A method of recovering heat from a furnace (2) in which granular material is subjected to heat, the method being characterised by the steps of extracting hot exhaust gases from the furnace (2), passing at least a proportion of the hot gases through further granular material outside the furnace, and subsequently feeding the further granular material into the furnace (2) for heating.

2. A method according to Claim 1 characterised in that the extracted hot exhaust gases are passed through a separating means (1) such as one or more cyclone separators, prior to passing through the further granular material, to separate solids from the gases.

3. A method according Claim 1 or Claim 2 characterised in that the further granular material through which the hot exhaust gases are passed is contained in a container (H) such as a hopper, from which the further granular material is fed into the furnace (2) for heating.

4. A method according to Claim 3 characterised in that the hot exhaust gases are fed into the container (H) through an inlet (5) in a wall thereof and are constrained to pass generally through the further granular material before passing from the container (H).

5. A method according to Claim 3 or Claim 4 characterised in that moisture which condenses out from the hot exhaust gases is removed from the container (H) through an opening or openings (8,9) in a lower wall thereof.

6. A method according to any one of Claims 1 to 5 characterised in that the further granular material is supported on a vibrating screen within the container (H) and hence is agitated as the hot exhaust gases are passed therethrough.

7. A method according to any one of Claims 1 to 6 characterised in that the extent of condensation of moisture from the hot exhaust gases within the further granular material is sensed and the rate at which the exhaust gases are passed into the further granular material is correspondingly adjusted to

- 9 -

0195642

achieve optimum heat transfer between the exhaust gases and the further granular material.

8.   A method according to any one of Claims 1 to 7 characterised in that the granular material and the further granular material, comprise stones which have been cleaned by washing.

9.   An apparatus for recovering heat from a furnace (2) in which granular material is subjected to heat, characterised in that the apparatus comprises means (3) to extract exhaust gases from the furnace (2), means to pass the hot gases through further granular material outside the furnace (2), and means (4, 1) subsequently to feed the further granular material into the furnace (2).

10.   An apparatus according to Claim 9 characterised in that the apparatus has any of the features of an apparatus for use in a method according to any one of Claims 1 to 8.

0195642